# EUROPEAN PATENT APPLICATION

(11) **EP 1 055 986 A2**
(43) Date of publication of application: **29.11.2000**
(21) Application number: 00304476.5
(22) Date of filing: 25.05.2000
(51) Int. Cl.: G05D 16/20

(54) **Fluid pressure regulating valve**

(30) Priority: 26.05.1999 GB 9912241
(71) Applicant: IMI WATSON SMITH LIMITED, Leeds LS6 2RT (GB)
(72) Inventor: Rhodes, Daniel, Farsley, Pudsey, West Yorkshire LS2 5AJ (GB)
(74) Representative: Lane, Michael John

(57) **Abstract**

A fluid, eg. compressed air, pressure regulating valve providing a regulated fluid pressure output that is proportional to the value of an electrical control signal (C) applied to the valve comprises a body (1), a bore (2) in the body (1), a fluid supply port (3) and a fluid output port (4) communicating with the bore (2), and an axially moveable spool (6) mounted in the bore (2). The axial position of the spool (6) in the bore (2) is determined by a pilot pressure signal acting on a diaphragm (8) associated with one end of the spool (6), the pilot pressure signal being proportional to the value of the control signal (C). Differing axial positions of the spool (6) result in differing cross-sectional flow paths between the supply port (3) and outlet port (4) and hence in a fluid pressure output proportional to the value of the control signal (C).

## Description

This invention relates to fluid pressure regulating valves and more particularly to valves which provide a regulated fluid pressure output that is proportional to the value of an electrical control signal applied to the valve.

According to the present invention, there is provided a fluid pressure regulating valve comprising a body, a bore in the body, a fluid supply port communicating with the bore, a fluid output port communicating with the bore, a spool mounted in the bore and axially moveable therein between a plurality of positions so as to provide a restriction of variable cross-section in the fluid flow path between the supply port and the output port whereby the fluid output pressure at the output port varies in dependence upon the axial position of the spool, spring means to bias the spool axially in one direction and fluid pressure actuated means operable in response to an electrical control signal to bias the spool axially in the opposite direction against, and into force-balanced relationship with, the spring means, the force generated by said fluid pressure actuated means on the spool, and thus the axial position of the spool at balance, being controlled in dependence upon the value of the electrical control signal.

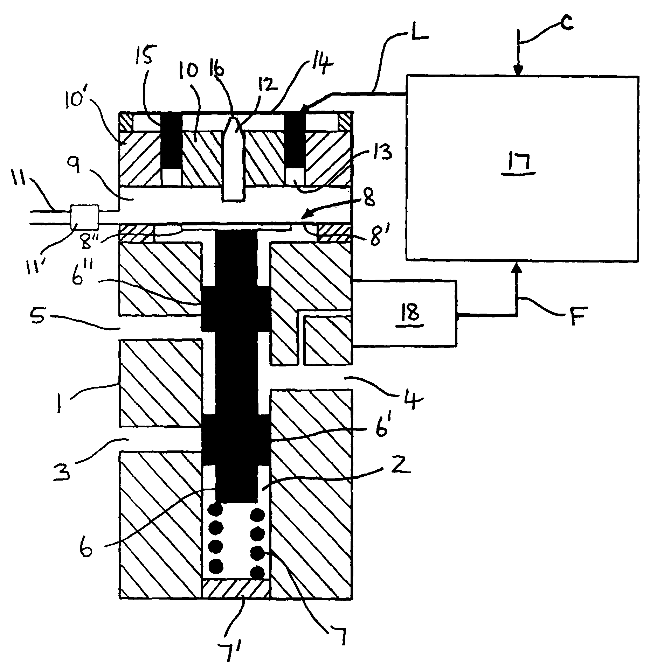

In a preferred embodiment, the fluid pressure actuated means includes a diaphragm, one surface of which is attached to, or engages, an end of the spool, and the other surface of which is exposed to a fluid, the pressure of which can be varied in dependence upon the value of the electrical control signal. Preferably the fluid pressure acting on the diaphragm is controlled by a moving coil flapper/nozzle assembly as is described in more detail below with reference to the accompanying drawing. In an alternative embodiment, the diaphragm could be replaced by, for example, a piston type of arrangement.

The spring means is preferably a dynamic compression spring, although alternative types of resilient biasing means may be employed.

Also in a preferred embodiment, a pressure regulating valve of the invention includes feedback control as again is described in more detail with reference to the accompanying drawing.

The fluid output pressure of a valve of the invention may be a negative (ie. sub-atmospheric) pressure or a positive (ie. super-atmospheric) pressure. Further, while the fluid output pressure would normally be arranged to be linearly (ie. directly) proportional to the value of the electrical control signal, it may vary in accordance with some other pre-determined function of the value of the electrical control signal.

A fluid pressure regulating valve of the invention will now be described in more detail, by way of example only, with reference to the accompanying schematic drawing which is a sectional side elevation of the valve.

Referring to the drawing, the valve comprises a body 1 having a longitudinally extending cylindrical bore 2 formed in it. The body 1 also has a pressurised fluid, eg. compressed air, supply port 3, a fluid pressure output port 4 and an exhaust port 5 formed in it, all of which communicate with the bore 2.

Mounted in the bore 2 is a spool 6 which is formed with a pair of cylindrical lands 6',6'', the cylindrical surfaces of which form a glandless, fluid-tight seal with the wall of the bore 2 (alternatively, and in known manner, the seal may be provided by O-rings). The spool 6 is biased in an upward direction by a dynamic compression spring 7 which acts on the lower end of the spool 6. The spring 7 sits on a support 7' which also serves to close off the bore 2 at its lower end.

The upper end of the spool 6 co-operates with a diaphragm assembly designated generally 8 which is secured at its periphery. The diaphragm assembly 8 comprises a flexible, for example synthetic rubber, membrane 8' secured to a central, rigid disc 8'' which abuts the upper end of the spool 6.

The diaphragm assembly 8 closes off the upper end of the bore 2 and its upper surface defines the base of a chamber 9. The top of the chamber 9 is defined by radially inner and outer, annular permanent magnet assemblies 10 and 10' described in more detail below. The chamber 9 is closed save for a pressurised control fluid inlet 11 and a nozzle member 12, again as described in more detail below.

The annular, permanent magnet assemblies 10 and 10', which are of opposite polarity, are spaced from one another so as to define between them an annular gap 13 which is closed at its base but open at its top. A flexure 14 is located above the magnet assemblies 10 and 10' and supports an annular electromagnetic coil 15 which freely depends into the annular gap 13 defined by the magnet assemblies 10 and 10'. More particularly, the flexure 14 comprises a peripheral, annular portion and an apertured central portion which are joined together by a number of spaced, springy legs. The peripheral portion is spatially fixed whereas the central portion can, via the legs, flex upwardly and downwardly. The coil 15 is secured to the central portion which, within the confines of the coil 15, defines a flapper surface which co-operates with the outlet 16 of the nozzle 12. Preferred constructions of the magnet assemblies 10 and 10', the nozzle member 12, the flexure 14 and the coil 15 are fully described in our British patent application No 2314426, the disclosure of which is incorporated herein by way of reference thereto, and to which the reader is referred.

The coil 15 is connected, by a pair of leads L, to the output of an electronic control unit 17 to which, in use, is fed an electrical control signal C and an output pressure feedback signal F generated by a pressure transducer 18 that senses the pressure present at the fluid pressure output port 4.

The valve operates as follows. Compressed air is continuously supplied through the inlet 11 and a flow restrictor 11' to the chamber 9 whence it flows through the nozzle member 12 and out of the latter's outlet 16. It then escapes to atmosphere via the aperture(s) formed in the central portion of the flexure 14, a passageway (not shown) in the body 1 and a baffle (not shown) incorporated in the spring support 7'. During use of the valve, compressed air supplied to the inlet 11 continuously exhausts, to a greater or lesser extent, to atmosphere in the aforesaid manner. The drawing shows the valve in its "zero" position, ie. with no, or a pre-determined minimum value, control signal C applied to the control unit 17. In this position, the gap between the nozzle outlet 16 and the flapper surface of the flexure 14 is sufficiently large that the static pressure established in the chamber 9 exerts only a relatively low downward force on the diaphragm assembly 8. Hence, the dynamic spring 7 maintains the position of the spool 6 in its uppermost axial position, with the upward force exerted by the spring balancing the downward force exerted by the diaphragm assembly 8. In that position, it can be seen that the land 6' of the spool 6 closes off the port 3, whereas communication is established between the output port 4 and the exhaust port 5 via the bore 2. Accordingly, the fluid, eg. compressed air, pressure prevailing at the port 4, ie. the output pressure of the valve, will equate to atmospheric pressure.

It now, an electrical current, or increased electrical current (ie. control signal C) is fed to the control unit 17, the output of the control unit 17 increases correspondingly and an electromagnetic field (or increased electromagnetic field, as the case may be) is generated by the coil 15 and this interacts with the magnetic field generated by the permanent magnet assemblies 10 and 10'. The coil 15 is therefore attracted downwardly further into the annular gap 13 together with the flapper surface whereupon the gap between the flapper surface and the outlet 16 decreases and, in turn, the rate of escape of air from the latter decreases. Hence, the pressure in the nozzle assembly 12/chamber 9 increases and the diaphragm assembly 8/spool 6 move downwardly against the dynamic spring 7 until the increased downward force acting on the diaphragm assembly 8 balances the increased upward force exerted by the dynamic spring 7. In moving downwardly to its new axial position, the land 6'' of the spool 6 closes off exhaust port 5, whereas the land 6' partially clears the port 3 and a restricted degree of communication between the ports 3 and 4 is established. The output pressure at port 4 will therefore change to a value which is a function of the fluid pressure applied to the port 3 and the extent to which the port 3 is open. The supply fluid pressure applied to the port 3 may be a sub-atmospheric pressure (ie. a partial vacuum) or a super-atmospheric pressure producing, respectively, a suction or a positive gauge pressure output at the port 4.

As will be apparent, the higher the value of the electrical control signal C, the greater the downward displacement of the spool 6 and hence the degree of opening of the port 3 whereby the valve will provide an output pressure that is linearly proportional to the value of the control signal C, ranging from atmospheric pressure to supply fluid pressure.

The accuracy and stability of the output pressure of the valve may be improved by providing a closed loop control system, the nature of which will be familiar to those skilled in the art and need not be described in detail. Briefly, however, such a system comprises the pressure transducer 18 that senses the magnitude of the fluid pressure prevailing at the output port 4 and generates an electrical signal F that is proportional to the magnitude sensed. The signal F is fed to the electronic control circuit 17, a principal constituent of which is a comparator circuit which compares the value of F with the value of the control signal C, and should the output pressure as indicated by the value of F differ from the desired output pressure corresponding to the value of C, the control unit 17 will alter the value of the signal actually transmitted to the coil 15 whereby the output pressure at the port 4 will be adjusted to the desired value.

Usually, the magnitude of the electrical control signal C will be variable in accordance with usual standards, say between 4mA and 20mA, (although any one of a variety of current or voltage input signal ranges may be used, as appropriate). That is to say that, with a control signal C of 4mA, the valve will assume its zero position as shown in the drawing and the pressure at the output port 4 will be atmospheric pressure whereas, with a control signal C of 20mA, the pressure at the output port 4 will be at its maximum positive (or, as the case may be, maximum negative) pressure, relative to atmospheric pressure, with the supply port 3 being fully open.

Preferably, and as is described in our aforementioned UK patent application, the nozzle member 12 is threadedly secured in the permanent magnet assembly 10. Thus, in order roughly to calibrate the valve, the nozzle member 12 may be rotated in order to adjust the size of the gap between the nozzle outlet 16 and the flapper surface so as to ensure that, with, say, a control signal C of 4mA, the valve more or less assumes its zero position as shown in the drawing. Precise calibration is achieved using zero and span trimpots that form part of the control unit 17.

As noted earlier, the valve specifically described above may where appropriate incorporate other preferred features described in our aforementioned patent application.

Finally, the control unit 17 may comprise analogue circuitry or digital circuitry, in which latter case the control signal C may alternatively be a digital signal generated, for example, by a microprocessor.

## Claims

1. A fluid pressure regulating valve comprising a body, a bore in the body, a fluid supply port communicating with the bore, a fluid output port communicating with the bore, a spool mounted in the bore and axially moveable therein between a plurality of positions so as to provide a restriction of variable cross-section in the fluid flow path between the supply port and the output port whereby the fluid output pressure at the output port varies in dependence upon the axial position of the spool, spring means to bias the spool axially in one direction and fluid pressure actuated means operable in response to an electrical control signal to bias the spool axially in the opposite direction against, and into force- balanced relationship with, the spring means, the force generated by said fluid pressure actuated means on the spool, and thus the axial position of the spool at balance, being controlled in dependence upon the value of the electrical control signal.

2. A fluid pressure regulating valve according to claim 1 wherein the fluid pressure actuated means includes a diaphragm, one surface of which is attached to, or engages, an end of the spool, and the other surface of which is exposed to a fluid, the pressure of which can be varied in dependence upon the value of the electrical control signal.

3. A fluid pressure regulating valve according to claim 2 wherein, in use, the magnitude of the fluid pressure acting on the diaphragm is controlled by a nozzle/flapper assembly, the flapper being attached to a moving coil associated with a permanent magnet assembly and the electrical control signal being fed to the moving coil.

4. A fluid pressure regulating valve according to any one of claims 1 to 3 wherein the spring means is a dynamic compression spring.

5. A fluid pressure regulating valve according to any one of claims 1 to 4 comprising control circuitry responsive to an electrical control signal in analogue form.

6. A fluid pressure regulating valve according to any one of claims 1 to 4 comprising control circuitry responsive to an electrical control signal in digital form generated, for example, by a microprocessor.

7. A fluid pressure regulating valve according to any one of claims 1 to 6 further comprising control circuitry responsive to a feedback signal generated by a pressure transducer and indicative of the fluid output pressure of the valve.
